# EUROPEAN PATENT APPLICATION

(11) **EP 3 287 246 A1**
(43) Date of publication of application: **28.02.2018**
(21) Application number: 17186729.4
(22) Date of filing: 17.08.2017
(51) Int. Cl.: B28C 5/42, B01F 13/00, B60P 3/16

(54) **DELIVERY VEHICLE**

(30) Priority: 18.08.2016 GB 201614126
(71) Applicant: Hymix Ltd, Telford, Shropshire TF3 3AY (GB)
(72) Inventor: HUMPISH, Nicholas James, Telford TF7 5BN (GB)
(74) Representative: Wynne-Jones, Lainé and James LLP

(57) **Abstract**

A delivery apparatus for transporting materials, the apparatus being configured to be mounted or otherwise affixed on a vehicle chassis, and comprising:
- a plurality of individual containers (12);
- a mounting interface (10a, 10b) having a longitudinal axis and being configured to removably receive said plurality of containers (12), in side-by side configuration, along its length such that each container extends generally laterally across said mounting interface and is selectively and independently removable therefrom; wherein each container has a shaft extending therethrough, between end walls thereof, said shaft having mounted thereon, or being coupled to, at least one mixing blade; and
- in respect of each container, a drive (30) coupled to a respective shaft for selective rotation thereof.

## Description

This invention relates generally to a delivery vehicle and, more particularly but not necessarily exclusively, to a mortar delivery vehicle and/or a mortar delivery apparatus mounted or mountable on a road vehicle for transporting multiple classes and/or colours of ready-to-use mortar.

Mortar is a well known composition used in the construction industry as a bonding agent for bricks, stones and the like. Many different classes and colours of mortar are known and widely used in the field, and it is common in the industry to utilise a single mortar delivery truck to perform a multi-drop delivery of different classes/colours of mortar to different (or, indeed, the same) destination in a single delivery run.

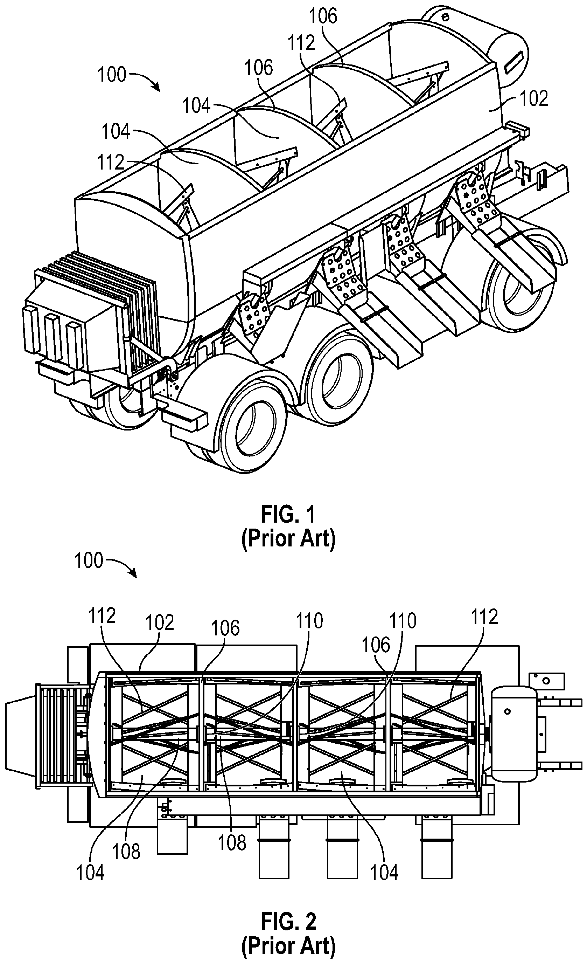

Figures 1 and 2 are schematic perspective and plan views respectively of a typical mortar delivery vehicle 100 for this purpose. The truck 100 has, mounted on its chassis, a single, large container 102 that extends along substantially its entire length. The container 102 is divided into a plurality of individual compartments 104 by respective lateral dividing walls 106. A generally central aperture is provided in each of the dividing walls 106 and a shaft 108 extends longitudinally through the container 102 and each of the compartments 104 through the apertures. As can be best seen in Figure 2 of the drawings, a seal 110 is provided on one side of each of the dividing walls, between the aperture and the shaft, to seal each compartment 104 from its neighbouring compartment(s). A motor (not shown) is coupled, via a gear box (not shown) to one end of the shaft 108 to drive it. Within each of the compartments 104, a set of mixing fins or blades 112 is provided, coupled or affixed to, and extending radially outwardly from, the respective section of the shaft 108. Thus, a different class/colour of mortar can be placed within each of the compartments 104 for transportation. The shaft 108 is driven to rotate the mixing blades/fins 112 in each of the compartments 104, to turbulate the mortar therein and thereby prevent it from settling out as a result of the passage of time and/or induced by the vibration and/or movement of the vehicle. Cross-contamination of the different compounds is intended to be prevented by the seals 110 between the shaft 108 and the apertures in the compartment walls.

However, in practice, chassis bending and torsion can cause the shaft to rub against the seals in the compartment walls, allowing cross-contamination of product(s) and resulting in rejected loads, high maintenance costs and significant down time of the entire vehicle. Furthermore, wearing of the shaft can cause premature and immediate unforeseen failure that results in the vehicle being off the road, potentially for long periods of time. Still further, if a compartment fails, the entire container and delivery system must be taken out of commission for repairs; and, in the same vein, if the mortar goes off in one of the compartments, the shaft will not turn and the mortar in all of the other compartments will go off as well.

It is an object of aspects of the present invention to address at least some of these issues and, in accordance with a first aspect of the present invention, there is provided a delivery apparatus for transporting materials, the apparatus being configured to be mounted or otherwise affixed on a vehicle chassis, and comprising:
- a plurality of individual containers;
- a mounting interface having a longitudinal axis and being configured to removably receive said plurality of containers, in side-by side configuration, along its length such that each container extends generally laterally across said mounting interface and is selectively and independently removable therefrom; wherein each container has a shaft extending therethrough, between end walls thereof, said shaft having mounted thereon, or being coupled to, at least one mixing blade; and
- in respect of each container, a drive coupled to a respective shaft for selective rotation thereof.

Optionally, the containers may be mounted in side-by-side and spaced apart configuration along at least a portion of said mounting interface. In an exemplary embodiment, one or more of the containers may comprise a dividing wall therein to define two compartments, wherein said dividing wall is oriented substantially orthogonally to the longitudinal axis of the shaft and has an opening therein through which said shaft extends.

In an exemplary embodiment, each container may comprise a receptacle portion, at least partially open at one end, and a base portion at the opposing, closed end thereof. Each said base portion may have an upper and lower end, when oriented for use, the upper end being profiled to support the closed end of the respective receptacle portion and the lower end including fixing means for enabling the container to be selectively and removably affixed to the mounting interface. The base portion may, for example, comprise a pedestal-like structure formed of a pair of substantially vertical, parallel spaced-apart struts that act to vertically space the receptacle portion from the mounting interface, in use. The apparatus may further comprise at least one resiliently flexible spacer device located between said base portion and said mounting interface. The base portion may be removably affixed to said mounting interface by means of one or more bolts, with at least one resiliently flexible spacer device therebetween.

The receptacle portion may have a rounded closed end, supported by said profiled upper end of said base portion, and the lower end of said base portion may define a generally planar mounting area, having fixing means at or adjacent each corner thereof.

In an exemplary embodiment, each container may comprise a lid for selectively covering and uncovering the open end of a respective receptacle portion. In this case, the lid may comprise a generally central hinge defining an apex with a lid portion on each side, at least one of said lid portions being pivotable about said hinge to selectively open and close a side of said receptacle portion. Both lid portions may be selectively and independently pivotable about said hinge to open and close a respective side of said receptacle portion.

In an exemplary embodiment, each container may have an outlet adjacent a lower, closed end thereof, and means for selectively opening and closing said outlet. Such means for selectively opening and closing an outlet may comprise a trap door slidable or pivotable via an actuating mechanism, such as a manually operable lever, hydraulic or peneumatic powered actuating means or electrical powered actuating means, to selectively open and close said outlet. In some exemplary embodiments, an outlet and trap door arrangement may be provided at each end of the receptacle portion, to permit selective discharge of the contained material on either side of the vehicle, depending on the circumstances. This is particularly relevant to an embodiment wherein a dividing wall is provided within a container, to define a compartment at each end of the container for receiving different respective classes/colours of mortar, for example. In that case, an outlet would be provided at each end to permit selective discharge of the material in one or other of the compartments.

In an exemplary embodiment, the apparatus may comprise a mounting device located externally adjacent each said container outlet and configured to selectively and removably receive a chute for dispensing material from a respective container when its outlet is open. In an alternative exemplary embodiment, a chute may be mounted externally adjacent each said container outlet, wherein the chutes may be movably (e.g. pivotally or hingedly) mounted for movement between a first, stored configuration and a second, deployed configuration, as required.

In accordance with another aspect of the present invention, there is provided a delivery vehicle comprising a chassis having delivery apparatus substantially as described above mounted or otherwise provided thereon.

The mounting interface may comprise a pair of spaced apart, substantially parallel rails mounted or otherwise provided along the length of said chassis. Such rails may comprise a plurality of spaced-apart mounting regions along their length, each mounting region comprising fixing means for removably receiving a single container.

Each mounting region may comprise two pairs of aligned and opposing apertures, one of each pair being provided in a respective rail, each mounting aperture being configured to receive a respective bolt or other fastening means.

These and other aspects of the present invention will be apparent from the following specific description, in which an embodiment of the present invention is described, by way of example only, and with reference to the accompanying drawings, in which:
Figure 1 is a schematic perspective view of a mortar delivery vehicle according to the prior art;
Figure 2 is a schematic plan view of the mortar delivery vehicle of Figure 1;
Figure 3A is a schematic view of one side of a mortar delivery vehicle according to an exemplary embodiment of the present invention;
Figure 3B is a schematic view of the other side of the mortar delivery vehicle of Figure 3A;
Figure 4 is a schematic front perspective view of the mortar delivery vehicle of Figures 3A and 3B;
Figure 5 is a schematic rear perspective view of the mortar delivery vehicle of Figures 3A and 3B; and
Figure 6 is a schematic rear perspective view of the mortar delivery vehicle of Figures 3A and 3B with the end walls of the containers removed to show the interiors.

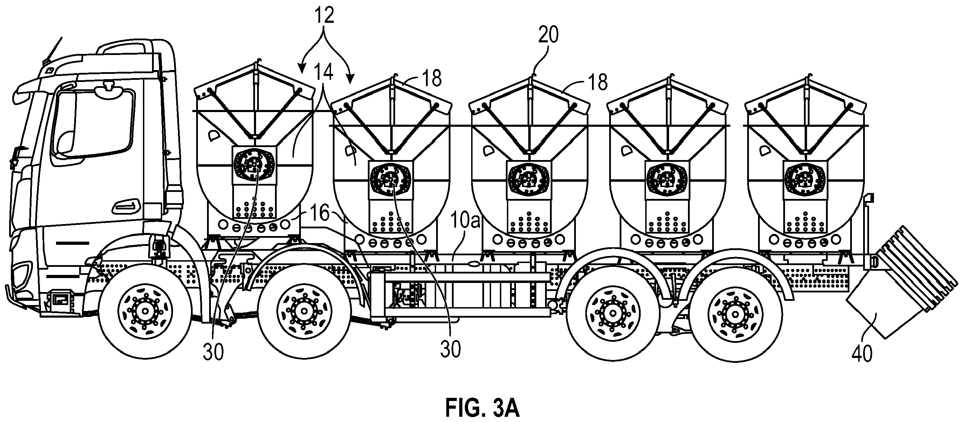

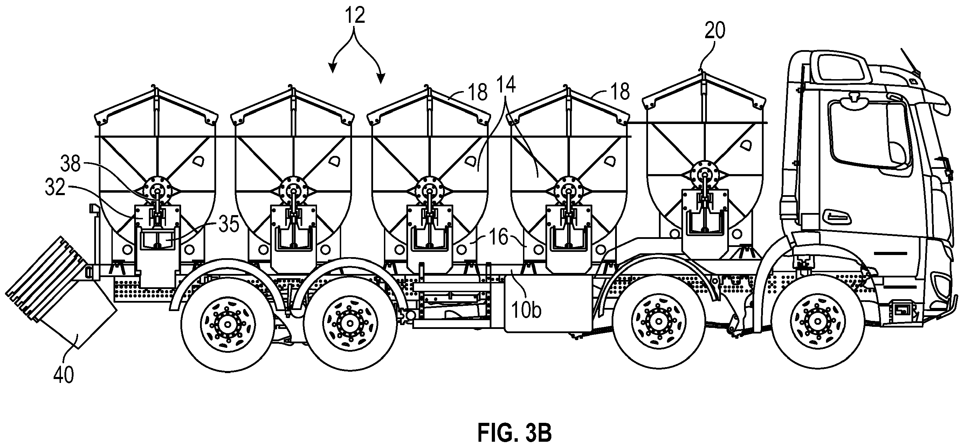

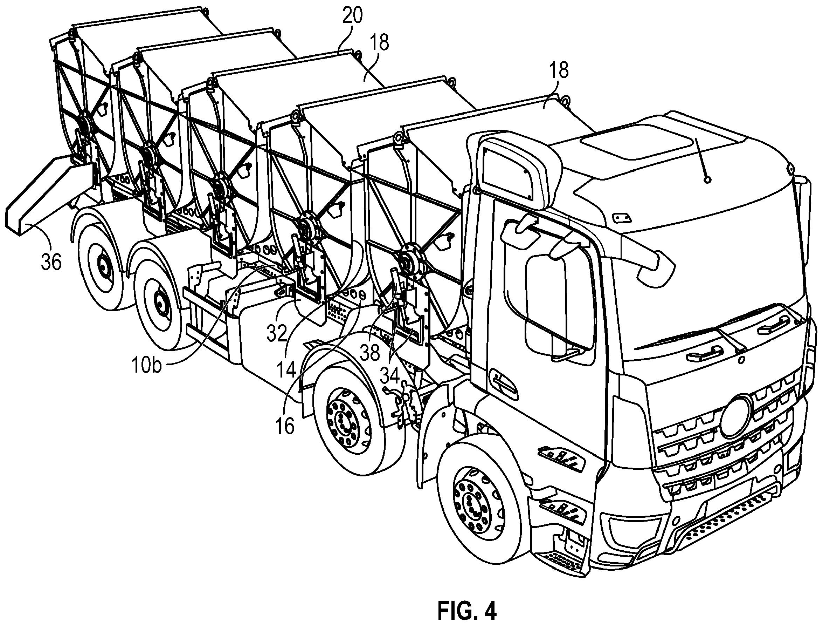

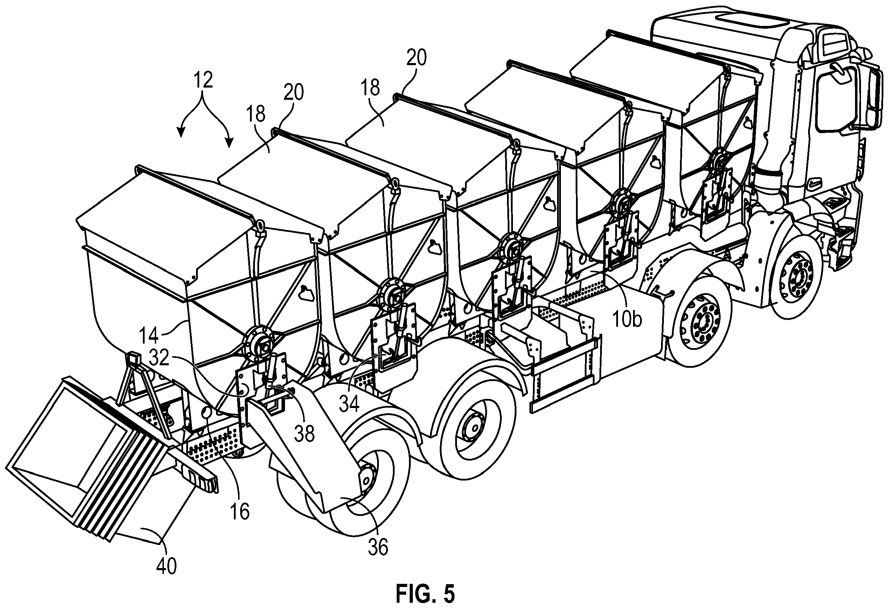

Referring to Figures 3A, 3B and 4 to 6 of the drawings, a mortar delivery apparatus according to an exemplary embodiment of the present invention is mounted on the chassis of a road vehicle. The mortar delivery apparatus comprises a pair of parallel, spaced apart rails 10a, 10b mounted or otherwise provided along the length of the vehicle chassis. A plurality of containers 12 is mounted in side-by-side, spaced apart relation along the length of the rails 10a, 10b such that each container 12 extends laterally relative thereto between the side edges of the vehicle. Each container 12 comprises a receptacle portion 14 and a base portion 16. The receptacle portion 14 and the base portion may be integrally formed or they may be separate components connected or coupled together, and the present invention is not necessarily intended to be limited in this regard.

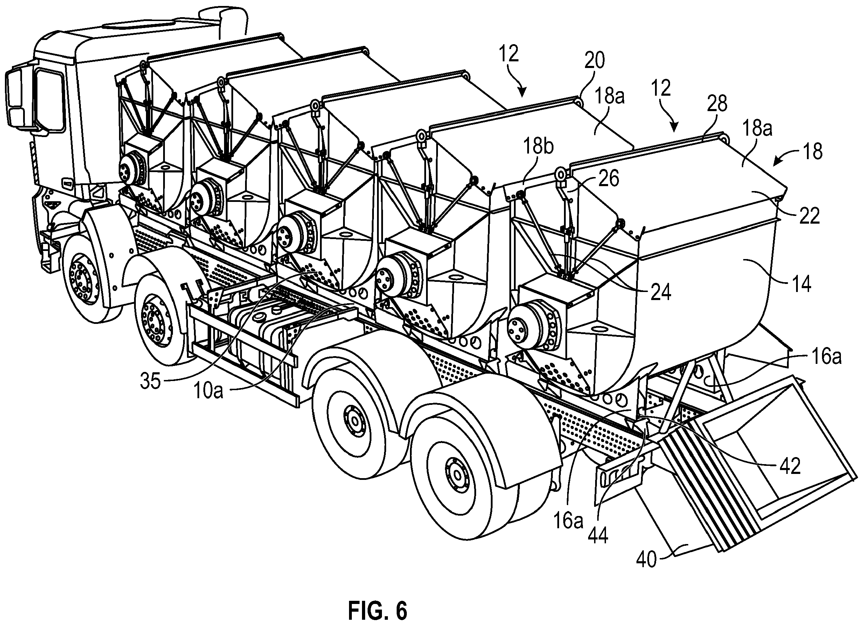

The receptacle portion 14 has generally vertical opposing end walls and is of generally U-shaped cross-section having a curved, closed lower end (when oriented for use) and linearly extending opposing side walls defining an open upper end. A lid 18 is provided over the open upper end of each receptacle portion 14. As can most clearly be seen in Figure 6 of the drawings, each lid 18 comprises a cover member formed of two generally rectangular plates 18a coupled along adjacent longitudinal side edges by a hinge 20 or other pivotal coupling mechanism. The opposing longitudinal edge of each plate 18a has a downwardly extending lip portion 22 covering the upper peripheral edges of the receptacle portion 14 in the closed configuration illustrated. In this closed configuration, each of the plates 18a is angled downwardly from the centre, with the central hinge defining an apex. A respective linkage arm 24 is pivotally mounted between each plate 18a and a common point on an end wall of the receptacle portion 14. A third link arm 26 extends generally vertically (and centrally) from the end wall of the receptacle portion 14 and is coupled at its upper end, by a pulley type arrangement 28, to a similar link arm extending upwardly on the opposing end wall of the receptacle portion 14. In use, the linkage arm arrangement 24, 26 can be utilised to selectively open the receptacle portion 14 to allow a batch of mortar to be placed therein by pivoting the plates 18a upwardly about the hinge 20 (toward each other and away from the open end of the receptacle portion 14).

A drive system 30 is mounted on an end wall of each receptacle portion 14. The drive system 30 is, in each case, coupled to a respective shaft that extends from the end wall, through the receptacle portion 14, to the opposite end wall. Coupled to, or mounted or otherwise provided on, the portion of the shaft within the receptacle portion 14, there is at least one mixing blade or fin (not shown). Thus, it can be seen that, in contrast to the prior art arrangements, the delivery apparatus provided by the present invention comprises individual, stand-alone and removable containers, each having their own shaft and drive mechanism, thereby mitigating the issues described above in relation to conventional mortar delivery vehicles.

On the opposite end wall of the receptacle portion 14 to that on which the drive system 30 is mounted, there is provided an opening adjacent the lower end of the receptacle portion 14. A vertical plate 32 is mounted over the opening, the plate defining an aperture covered by a trap door 35. A pair of spaced apart hooks 34 extend outwardly from each plate 32, the hooks 34 being configured to selectively and removably support a chute 36 thereon. The trap door 35, in each case, is selectively actuatable (in this case) by a lever mechanism 38 to selectively open and close the aperture and, thereby, selectively open and close the opening or 'outlet' in the receptacle portion 14. In use, if it is required to dispense mortar from one of the containers 12, an operative places the chute 36 on the respective hooks 34 provided for that container and then operates the respective lever mechanism 38 to release the associated trap door 35 and allow mortar from the receptacle portion 14 to be dispensed through the opening and down the chute 36, as required. A stack of tubs 40 is removably mounted at the rear of the vehicle chassis to receive mortar thus dispensed for use on-site.

As can be most clearly seen in Figure 6 of the drawings, each base portion 16 comprises a pedestal type structure formed of a pair of opposing, vertically extending strut members 16a, each located adjacent a respective end wall of the receptacle portion 14, and extending vertically downwardly from the closed lower end thereof. The strut members 16a each have a profiled upper edge that is curved to match the outer profile of the lower end of the receptacle portion 14 such that the receptacle portion 14 is supported therein, and vertically spaced apart from the rails 10a, 10b. The lower edge of the strut members 16 is substantially horizontal (when oriented for use) to enable then to be mounted on the rails 10a, 10b. At each end of the lower edge of each strut member 16a, there is provided an aperture for receiving a respective bolt 42. A mounting member 44 is provided between each aperture and a respective rail 10a, 10b. The mounting member 44 comprises a resiliently flexible spacer device. The rails 10a, 10b also include apertures for receiving the bolts 42 to affix each container 12 to the rails 10a, 10b, with the spacer devices between the base portion 16 and the rails 10a, 10b creating a flexible connection between the two to compensate for chassis bending and torsion.

Thus, the rails 10a, 10b define a plurality of mounting regions, each mounting region being configured to removably receive a container 12 in the manner described above (with spacer devices 44 between each container and the rails 10a, 10b), each mounting region being defined by a set of apertures comprising a pair of aligned, spaced-apart apertures in a first rail 10a and an opposing pair of aligned, spaced-apart apertures in the other rail 10b, with the spacing and location of the opposing pairs of apertures matching that of the apertures provided at the ends of the struts 16a forming a respective base portion 16.

Thus, it can be seen that the delivery apparatus of the present invention provides significant advantages compared with the conventional mortar delivery solutions embodied by the prior art described above with reference to Figures 1 and 2 of the drawings. A common interface is provided for all containers across many different vehicle types, that enables the containers to be held thereon separately, or configured in a number of different ways. The flexible mounting members (or spacer devices) compensates for chassis bending and torsion. Separate drives and shafts (carrying one or more mixing blades) are provided, and there are no dividing walls between compartments, thereby eliminating the risk of cross-contamination and wearing of shafts. The present invention facilitates easy exchange of failed units, thereby allowing the vehicle to continue to function even if one or more containers is disabled, and containers can be quickly changed for maintenance and cleaning and replaced with a similar container, to allow the vehicle to continue to operate at full capacity.

It will be apparent to a person skilled in the art, from the foregoing description, that modifications and variations can be made to the described embodiment without departing from the scope of the invention as defined by the appended claims. In particular, for example, the present invention is not intended to be limited in terms of the type and construction of the vehicle - it is envisaged that the delivery apparatus of the present invention can be adapted for use with a number of different types of vehicle, including, but not limited to, tipping equipment, flat-bed/drop-side vehicles, and other cargo carrying solutions. It will be further understood that the present invention is not necessarily intended to be limited to the number or, indeed, shape of the containers accommodated by the apparatus.

## Claims

1. A delivery apparatus for transporting materials, the apparatus being configured to be mounted or otherwise affixed on a vehicle chassis, and comprising:
- a plurality of individual containers;
- a mounting interface having a longitudinal axis and being configured to removably receive said plurality of containers, in side-by side configuration, along its length such that each container extends generally laterally across said mounting interface and is selectively and independently removable therefrom; wherein each container has a shaft extending therethrough, between end walls thereof, said shaft having mounted thereon, or being coupled to, at least one mixing blade; and
- in respect of each container, a drive coupled to a respective shaft for selective rotation thereof.

2. Apparatus according to claim 2, wherein said containers are mounted in side-by-side and spaced apart configuration along at least a portion of said mounting interface.

3. Apparatus according to claim 1 or claim 2, wherein one or more of the containers comprises a dividing wall therein to define two compartments, and optionally wherein said dividing wall is oriented substantially orthogonally to the longitudinal axis of the shaft and has an opening therein through which said shaft extends.

4. Apparatus according to any of the preceding claims, wherein each said container comprises a receptacle portion, at least partially open at one end, and a base portion at the opposing, closed end thereof.

5. Apparatus according to claim 4, wherein each said base portion has an upper and lower end, when oriented for use, the upper end being profiled to support the closed end of the respective receptacle portion and the lower end including fixing means for enabling the container to be selectively and removably affixed to the mounting interface, and optionally further comprising at least one resiliently flexible spacer device located between said base portion and said mounting interface.

6. Apparatus according to claim 4 or claim 5, wherein said base portion is removably affixed to said mounting interface by means of one or more bolts, with at least one resiliently flexible spacer device therebetween.

7. Apparatus according to any of claims 4 to 6, wherein said receptacle portion has a rounded closed end, supported by said profiled upper end of said base portion, and said base portion defines a generally planar mounting area, having fixing means at or adjacent each corner thereof.

8. Apparatus according to any of the preceding claims, wherein each container comprises a lid for selectively covering and uncovering the open end of a respective receptacle portion, and optionally:
wherein said lid comprises a generally central hinge defining an apex with a lid portion on each side, at least one of said lid portions being pivotable about said hinge to selectively open and close a side of said receptacle portion; and/or
wherein both lid portions are selectively and independently pivotable about said hinge to open and close a respective side of said receptacle portion.

9. Apparatus according to any of the preceding claims, wherein each container has an outlet adjacent a lower, closed end thereof, and means for selectively opening and closing said outlet.

10. Apparatus according to claim 9, wherein at least one of said containers has an outlet at opposing ends thereof, and means for selectively opening and closing each said outlet; and/or wherein said means for selectively opening and closing an outlet comprises a trap door slidable or pivotable via an actuating mechanism to selectively open and close said outlet, and optionally wherein said actuating mechanism comprises a manually operable lever coupled to said trap door or wherein said actuating mechanism comprises an electrically, hydraulic or pneumatic powered actuating means.

11. Apparatus according to claim 10, comprising a mounting device located externally adjacent each said container outlet and configured to selectively and removably receive a chute for dispensing material from a respective container when its outlet is open; or comprising a chute mounted externally adjacent each said container outlet, and optionally wherein each chute is permanently mounted for movement between a first, stored configuration and a second, deployed configuration, and optionally wherein each chute is pivotally or hingedly mounted externally adjacent each said container outlet.

12. A delivery vehicle comprising a chassis having delivery apparatus according to any of the preceding claims mounted or otherwise provided thereon.

13. A delivery vehicle according to claim 12, wherein said mounting interface comprises a pair of spaced apart, substantially parallel rails mounted or otherwise provided along the length of said chassis, and optionally wherein said rails comprise a plurality of spaced-apart mounting regions along their length, each mounting region comprising fixing means for removably receiving a single container.

14. A delivery vehicle according to claim 13 having delivery apparatus according to claim 5 mounted or otherwise provided thereon, wherein each mounting region comprises two pairs of aligned and opposing apertures, one of each pair being provided in a respective rail, each mounting aperture being configured to receive a respective bolt.

15. A delivery vehicle according to any of claims 12 to 14, comprising a mounting device for removably receiving a stack of tubs, each tub being configured to receive material dispensed from a container for use on-site.
